# EUROPEAN PATENT SPECIFICATION

(11) **EP 0 422 704 B1**
(45) Date of publication and mention of the grant of the patent: **29.03.1995**
(21) Application number: 90202028.8
(22) Date of filing: 25.07.1990
(51) Int. Cl.: A01G 9/10, A01G 9/08

(54) **Device for raising plants**
Vorrichtung zum Aufziehen von Pflanzen
Dispositif pour cultiver des plantes

(30) Priority: 11.09.1989 NL 8902261; 20.06.1990 NL 9001397
(43) Date of publication of application: 17.04.1991
(73) Proprietor: Synbra B.V., NL-6603 BM Wijchen (NL)
(72) Inventor: Veenman, Simon Johannes Marie, NL-2691 NZ 's-Gravenzande (NL)
(74) Representative: Van kan, Johan Joseph Hubert, Ir.

(56) References cited:
- EP-A- 0 323 674
- WO-A-88/07320
- FR-A- 1 252 090
- FR-A- 2 580 457
- NL-A- 7 802 217

## Description

The invention relates to a device for raising plants comprising at least one cup-shaped body comprising an upwardly extending boundary wall and a bottom plate, which bound a cavity which is intended for accommodating a ball of cultivating material for raising a plant, the bottom plate being provided with at least one passage, and several channels, which are open at their upper and lower ends and which extend in the vertical direction of the cup-shaped body being disposed near the boundary wall.

Such a device is known for EP-A-0 323 674. In this known device the channels form a star shaped through passage, which is completely open at its lower end. Such a construction may cause problems with regard to maintaining the desired moisture content in the cultivating material, since water and/or liquid nutritional substances or the like added to the cultivating material can easily flow away through the completely open lower ends of the channels, resulting in a poorly controllable situation with regard to raising the crop as effectively as possible.

The object of the invention is to obtain a device for raising plants of the above type, which does not have this drawback.

According to the invention this object is achieved in that at its lower end each channel is closed by a wall part having an opening, the upper surface of the wall part sloping downward in the direction of the cavity of the cup-shaped body.

As a result of the sloping upper surface of the wall part at the lower end of each channel any liquid flowing downwards along the channels can easily flow towards the bottom of the cavity so that it will be largely prevented that this liquid flows out through the openings in these wall parts.

Preferred embodiments of the device according to the invention are claimed in the dependent claims 2 to 10.

The invention also relates to a device for removing a ball of cultivated material from a cup-shaped body of a device for raising plants according to the invention, which is characterized by several fingers which are reciprocatingly movable through the channels of the cup-shaped body by means of driving means, and at least one ejection means, which is reciprocatingly movable through the passage in the bottom plate of the cup-shaped body by means of driving means.

The invention will be explained in more detail hereinafter with reference to the accompanying drawings.

Figure 1 is a diagrammatic sectional view of a box comprising a plurality of cup-shaped bodies, as well as means for removing balls of cultivating material accommodated in said cup-shaped bodies.

Figure 2 is a plan view of a cup-shaped body.

Figure 3 is a diagrammatic, perspective embodiment of a box according to the invention, with the associated leg illustrated spaced therefrom.

Figure 4 is a diagrammatic, perspective view of a part of a box, as well as filling bodies, which are used when filling the elongated cavities of the box, said filling bodies being illustrated spaced from the box.

Figure 5 is a diagrammatic, perspective view of a part of the box and the filling bodies in the position which they take when the box is being filled.

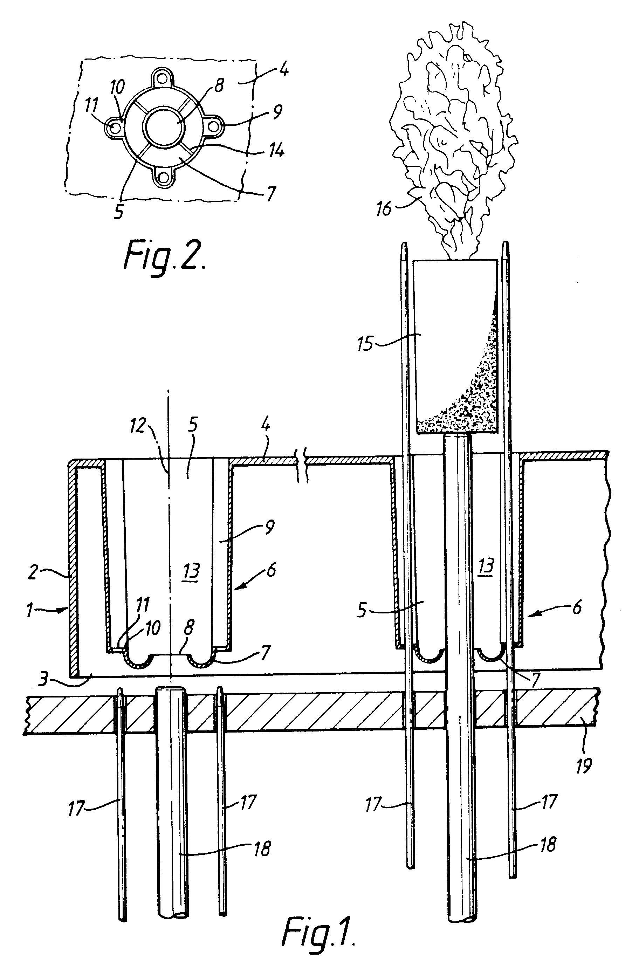

In Figure 1 a box-shaped means 1 is illustrated in section, said box-shaped means being provided with two longitudinal walls 2 (only one of which is illustrated) extending parallel to each other, which at their ends are connected by means of two transverse walls 3 (only one of which is illustrated) extending perpendicularly to said longitudinal walls 2, in such a manner that the longitudinal and transverse walls 2 and 3 form a rectangular frame. An upper plate 4, being integral with the walls 2 and 3, extends between the upper edges of said walls 2 and 3. The upper ends of boundary walls 5 of cup-shaped bodies 6 are connected to the upper plate 4. Said cup-shaped bodies 6 are thereby preferably formed of plastic material, integral with the upper wall 4. As will be apparent from Figure 1 each cup-shaped body 6 is open at its upper side. At the bottom side each cup-shaped body 6 is provided with a bottom plate 7. Said bottom plate 7 is provided with a passage 8 provided in the centre of the bottom plate and the part of the bottom plate concentrically surrounding said passage 8 has a profile which is more or less U-shaped in section.

Furthermore there are provided channels 9, four in the illustrated embodiment, extending in the vertical direction of the cup-shaped body, which are open at their upper side. At the bottom side of the channels 9 there are provided plate-shaped closing parts 10, which join up with the outer edge of the bottom plate 7. At least the upper surface of the plate-shaped part 10 slopes downwards thereby in the direction of the longitudinal axis 12 of the cup-shaped body.

In each plate-shaped part 10 there is provided a passage 11, so that each channel 9 is also open at its bottom end.

In the illustrated embodiment the channels 9 are open at the side directed towards the cavity 13 bounded by the cup-shaped body 6, whereby they have a more or less U-shaped section. Within the spirit and scope of the invention, however, also an embodiment wherein the channels 9 are closed at the side directed towards the cavity 13 is conceivable, so that the channels are formed by tubular parts which are open at their upper and lower sides.

As furthermore appears from Figure 2 a few at least substantially radially extending partition plates 14 are preferably provided in the U-shaped bottom plate 7.

In the cavities bounded by the cup-shaped bodies 6 balls of cultivating material may now be introduced for raising plants or similar crops. During the growing process of the crop water and/or liquid nutritional agents or the like can be supplied in desired quantities and in a desired manner near the open upper end of the cavity bounded by the cup-shaped body 6. An undesirable premature discharge of said liquid material will be prevented by the bottom plate 7 which at least partly closes the cavity 13 at the bottom side. Any liquid flowing downwards along the open channels 9 can easily flow towards the gutter shaped bottom part 7 as a result of the aforesaid oblique extension of the upper surfaces of the plate-shaped parts 10, so that it will be largely prevented that water flows out through the holes 11.

A blanking foil or the like may be loosely provided on the passage 8 prior to a ball of cultivating material being introduced.

During the growing process of the crop the partition plates 14 disposed in the U-shaped bottom 7 and possibly the channels 9, when they are open at the side directed towards the cavity 13, prevent that the roots of the crop undesirably grow in the shape of a spiral or of a circle.

For removing a ball of cultivating material 15, with the plant 16 being raised therein, from a cavity efficient use can be made of a device (not shown), which is provided with an ejection means 18, as well as with a few fingers 17 circumferentially disposed about said ejection means, which fingers can be guided in that they are passed through openings provided in a guide plate 19 forming part of the device.

As is illustrated in Figure 1 a box 1 comprising a plurality of cup-shaped bodies may be disposed above the guide plate 19, and be supported and held in a suitable manner thereby. When the box is being placed the ejection means 18 and the fingers 17 will be in the retracted position illustrated on the left in Figure 1.

For removing a ball of cultivating material 15 from a cavity 13 the fingers 17 will be moved upwards through the openings 11 and through the channels 9. The ejection means will be moved upwards through the central opening 8 in the bottom plate 7. The fingers 17 will thereby be moved along such a distance, that they can extend above the upper edge of the cup-shaped body along a certain distance, as is illustrated in the right-hand part of Figure 1, for guiding the ball of cultivating material, which is pushed up out of the cavity 13 by means of the ejection means, as is also illustrated in the right-hand part of Figure 1.

Preferably the construction is such that the ball of cultivating material can be moved by means of the ejection means 18 along such a distance that the upper part of the ball of cultivating material can be moved to a location above the upper ends of the fingers 17. With such a construction a means gripping the ball of cultivating material for discharging the ball of cultivating material does not need to engage the ball of cultivating material between the fingers 17, but such a gripping means may engage the part of the ball of cultivating material projecting above the fingers 16, which will facilitate the engaging action.

After the ball of cultivating material has thus been pushed out of the cavity and been discharged, the fingers 17 and the ejection means 18 may be retracted again. It will be apparent, that the reciprocating motion of the fingers 17, which may be mutually connected, as well as that of the possibly mutually connected ejection means may be effected by means of known driving means. A device by means of which the balls of cultivating material are ejected one by one from the cup-shaped bodies united in a box may be considered thereby, as well as a device which is provided with such a number of fingers and ejection means that all balls of cultivating material, which are accommodated in cup-shaped bodies forming part of a box can be simultaneously ejected from the cup-shaped bodies in question.

Of course variations and/or additions to the embodiment which is described above and illustrated in the Figures will be possible. Thus the number of channels 9 or the number of fingers 17 is not limited to four, although three will be a minimal number in order to be able to ensure a good guiding of a ball of cultivating material during ejection from the cavity 12 in question.

Both the cavity formed by the boundary wall of the cup-shaped body and the channels may have any desired diameter thereby.

It is not necessary either for the bottom to be provided with a single central passage for an ejection means, but it will also be possible that several openings are provided in the bottom plate, whilst in that case use may be made of a corresponding number of ejection means. This may in particular be important with cup-shaped bodies whose cavities have a comparatively large diameter. Of course the ejection means may furthermore have any desired shape and the opening in question in the bottom plate may have a shape adapted to the sectional shape of the ejection means.

In the illustrated embodiment the box with the cup-shaped bodies is made of plastic material, whereby the cup-shaped bodies have relatively thin walls. It is also conceivable, however, that the walls of the cup-shaped bodies are formed by a material which entirely fills the interspaces between the cup-shaped bodies.

In the illustrated embodiments the cup-shaped bodies form part of a box in which the cup-shaped bodies are disposed in rows and columns. It will also be conceivable within the spirit and scope of the invention, however, to connect the cup-shaped bodies, whether or not detachably, to an elongated strip or band, within the spirit of the construction disclosed in French Patent Specification 2,357,160. For introducing the ball of cultivating material to the cavity or removing said ball of cultivating material from the cavity, as the case may be, the cup-shaped bodies mutually connected in a long row in this manner may e.g. be guided along a device which is suitable for carrying out said introducing or removing action.

It is also conceivable to use loose cup-shaped bodies according to the invention.

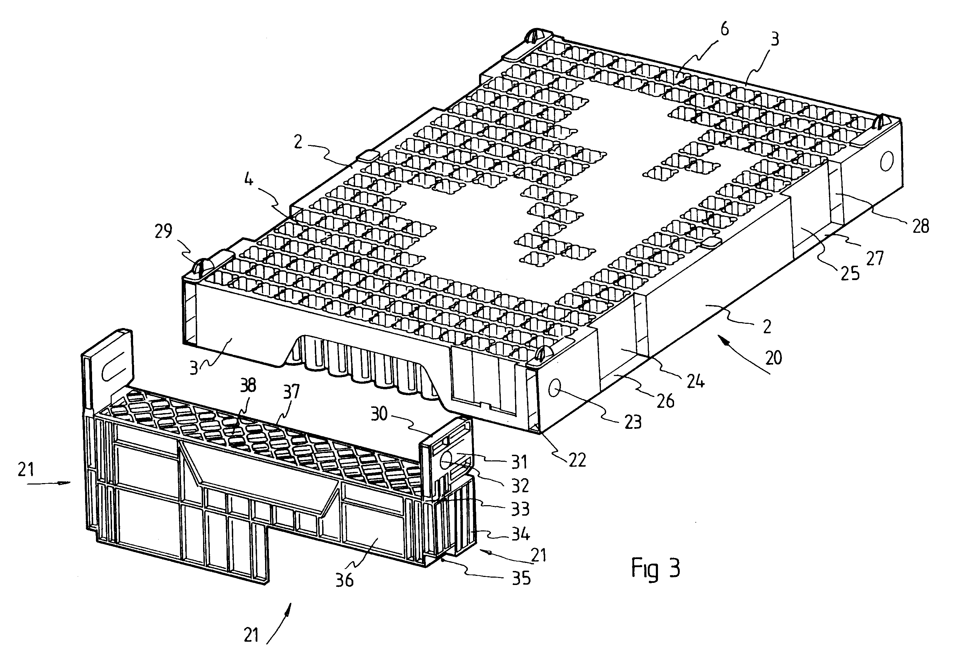

Figure 3 shows a combination of a box-shaped means and also, illustrated spaced from said box-shaped means, legs 21 to be coupled to said box-shaped means, which legs will be described in more detail hereinafter. It is already noted here, however, that the right-hand leg illustrated in Figure 3 is shorter than the left-hand leg illustrated in said Figure, whilst generally legs having the same length will be coupled to a box 20, of course.

The design of the box 20 in principle corresponds with that of the box described above with reference to Figures 1 and 2, accordingly parts corresponding with the parts described above have been given the same reference numbers as in Figures 1 and 2.

As is apparent from Figure 3 at least the longitudinal walls 2 are double-walled and open at their ends, so that insert openings 22 are formed at the ends of the longitudinal walls 2 for receiving the upper ends of the legs 21 to be described in more detail hereinafter. In the outer wall parts of the longitudinal walls 2 there are thereby provided holes 23 near the ends of the longitudinal walls in question.

Furthermore the outer and upper wall parts of the double-walled longitudinal walls in question are thereby removed at some distance from the ends of the longitudinal walls 2, so that rectangular recesses 24 and 25 are formed in the longitudinal walls here. At their bottom sides said recesses are closed by strip-shaped parts 26 and 27 respectively, having the same width as the longitudinal walls, in order to prevent that when boxes 22 are stacked on top of each other an air flow can occur in the vertical direction of the stacked boxes.

The double-walled end parts of the longitudinal walls 2 are also open at their ends directed towards the recesses 24 and 25, so that insert openings 28 are formed here. As a result of this construction hook-shaped gripping means can be inserted into the recesses 24 and 25 provided in the longitudinal walls for receiving the box 20, the ends of which hook-shaped gripping means can be moved into the double-walled end parts of the longitudinal walls 2 via the openings 28.

Near the ends of the longitudinal walls there are furthermore provided projections 29 on the upper side of the longitudinal walls which, when the boxes 20 are stacked on top of each other, fit in corresponding recesses formed at the bottom sides of the longitudinal walls.

When the above-described box is used it is also possible, if desired, to detachably couple legs 21, which will preferably be made of plastic material, just like the box 20, to said box 20. For this purpose the leg is provided with an ear 30, which fits the double-walled end of the longitudinal wall 2 and which can be inserted into said end via the opening 22. Said ear 30 is provided with an elongated strip-shaped arm 31 being integral therewith, said arm at one end joining up with the remaining part of the ear and at its other end being provided with a projecting knob 32. When the ear 30 is inserted in the end of the wall 2 the knob will be slightly pushed away initially, in order to snap into the opening 23 with a view to securing the ear 30 to the box 20. For removing the ear 30 the knob 32 can be pressed down again via the opening 23.

Via a connecting rib 33 the ear 30 of the leg 21 is connected to a base part 34 of the leg. As a study of the right and the left leg illustrated in Figure 3 will show said base part 34 may have different lengths. At the bottom side of the base part 34 there is provided a recess 35 for accommodating a projection 29 when boxes 20 having legs are stacked on top of each other.

In the illustrated embodiment the legs are mutually connected by a vertical transverse wall 36, which will have the same height as the two equally high legs 21 connected through the transverse wall 36. In the attached position said transverse wall 36 will be located under a relevant transverse wall 3 of the box 20. A horizontally extending grate-shaped means 37 joins up with the upper wall of the transverse wall 36, which grate-shaped means 37 will extend under the outermost rows of cup-shaped bodies when the legs in question are coupled to the box 20. Said grate-shaped body 37 is thereby provided with passages 38 which are preferably shaped and disposed such that also when the legs 20 are coupled to a box the openings 8 and it provided in the cup-shaped bodies are easily accessible from below for passing fingers 17 and/or ejection means 18 therethrough.

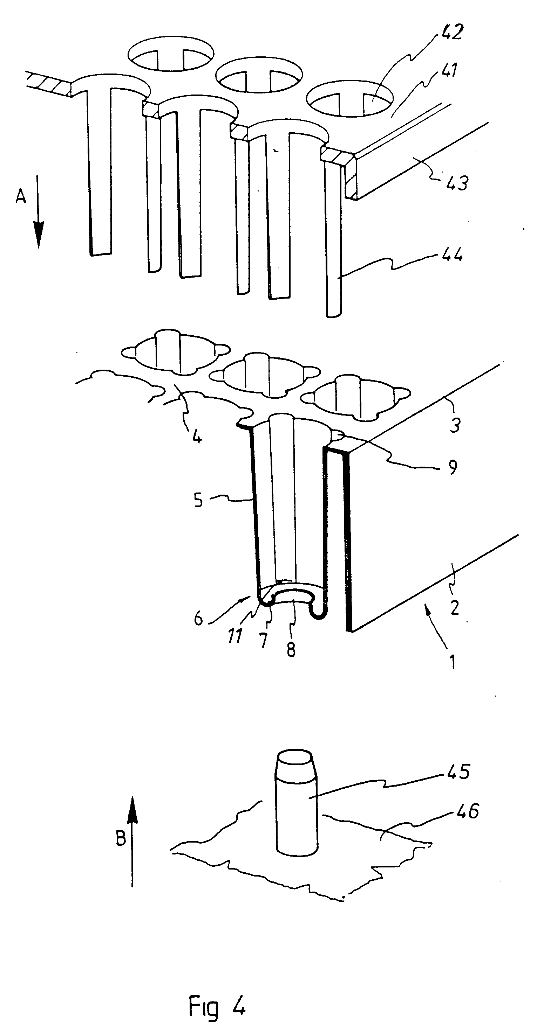

The box-shaped means 4 illustrated in Figure 4 is of the type such as described above. In Figure 4 parts corresponding with parts illustrated in the preceding Figures have therefore been given the same reference numbers as the ones used in the preceding Figures.

For providing cultivating and/or filling material in the cup-shaped bodies 6 use is inter alia made of the plate 41 illustrated in Figure 4, in which there are provided a plurality of openings 42. The number of said openings 42 and the mutual centre distance between said openings will correspond with the number of cup-shaped bodies 6 in the box-shaped container 1 and the mutual distance between said cup-shaped bodies 6 respectively.

The diameter of the opening 42 furthermore corresponds with the diameter of the upper end of a cup-shaped body 6.

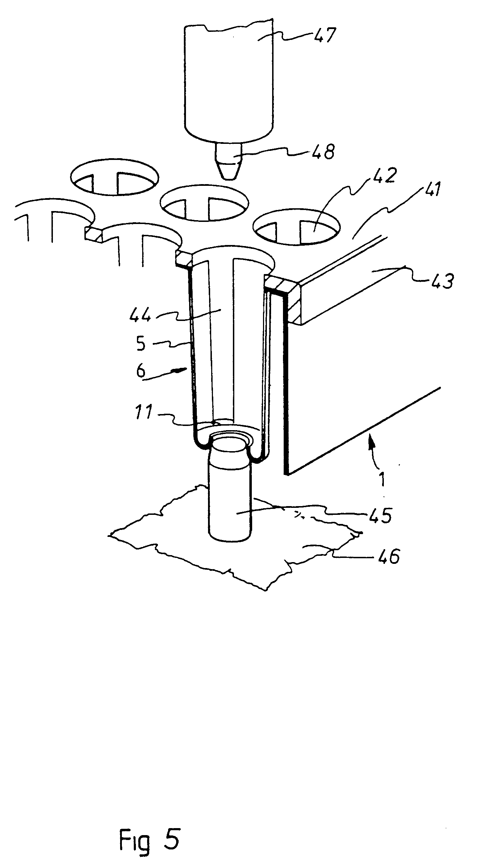

To the outer circumference of the plate there are secured descending edges 43. To the plate 41, near each opening 42, there are furthermore secured fingers or filling bodies 44 extending downwards from said plate 41. The number of said filling bodies 44 which is provided near each opening 42 corresponds with the number of channels 9 that join to each elongated cavity bounded by a cup-shaped body 6. The shape of the fingers or filling bodies 44 is furthermore adapted to the shape of the channels in question, so that when the plate 41 is put on the upper side of the box-shaped container 1, as illustrated in Figure 5, said fingers or filling bodies 44 will fill the channels 9 along their entire length. In this position the edges 43 secured to the plate 41 engage the box-shaped container 1.

The passages 8 may furthermore be closed by means of pins 45 secured to a plate 46, the upper ends of said pins being slightly conical in the illustrated embodiment.

From Figures 4 and 5 it will be apparent that a box-shaped container 1 may e.g. be placed on a table (not shown) between the plate 41 supporting the filling bodies 44 and the plate 46 supporting the pins 45. Then the plate 41 can be moved downwards in the direction according to arrow A, and the plate 46 can be moved upwards in the direction according to arrow B, until the various parts take the position illustrated in Figure 5.

Then cultivating and/or filling material may be introduced into the elongated cavities bounded by cup-shaped bodies 6 by way of means not shown, e.g. in the manner such as described in Dutch Patent Application 7,802,217, by allowing cultivating and/or filling material, whether or not moistened, to flow into the cavities in question. Said cultivating and/or filling material introduced into the cup-shaped bodies 6 may thereby be compressed in the desired manner by vibrating the box-shaped container 1 and/or by squeezing the cultivating and/or filling material by means of stamps 47, as is diagramatically indicated in Figure 5.

By using stamps having pins 48 it is also possible, if desired, to form a recess in the cultivating and/or filling material that has been introduced, whereby e.g. cuttings can be placed in the recesses thus formed.

It is noted that it may appear that it is not necessary to compress the material introduced by vibrating and/or squeezing said material when said material is introduced in the shape of mud.

After the cultivating and/or filling material has been introduced and compressed the plates 41 and 46 can be moved again in a direction remote from the box-shaped container 1 to a position, in which the box-shaped container is free from said plates and from the filling bodies 44 and pins 45, respectively, which are secured to said plates, after which the box-shaped container 1 filled with cultivating and/or filling material can be discharged and seeds or cuttings can be placed in the cultivating and/or filling material.

It will be apparent that instead of inserting the filling bodies into the box-shaped containers it is also possible to slide said box-shaped container over the stationarily disposed filling bodies.

A further possibility is that first cultivating and/or filling material is introduced in the elongated cavities of the box-shaped container. After the elongated cavities have been filled the pins or filling bodies 44 can be inserted into the channels 9, in order to push the cultivating and/or filling material which has landed in said channels when the elongated cavities were being filled out of the channels in question.

## Claims

1. Device for raising plants comprising at least one cup-shaped body (6) comprising an upwardly extending boundary wall (5) and a bottom plate (7), which bound a cavity (13) which is intended for accommodating a ball of cultivating material (15) for raising a plant (16), the bottom plate being provided with at least one passage (8), and several channels (9), which are open at their upper and lower ends and which extend in the vertical direction of the cup-shaped body (6), being disposed near the boundary wall (5), characterized in that at its lower end each channel (9) is closed by a wall part (10) having an opening (11), the upper surface of the wall part (10) sloping downward in the direction of the cavity (13) of the cup-shaped body (6).

2. Device according to claim 1, characterized in that a part of the bottom plate (7) surrounding a passage (18) in the bottom plate (7) has a gutter-shaped cross section.

3. Device according to claim 1 or 2, characterized in that on the bottom plate (7) there are provided partition plates (14) extending upwards from the bottom plate.

4. Device according to claim 3, characterized in that the partition plates (14) are disposed in the part of the bottom plate (7) having a gutter-shaped section.

5. Device according to claim 3 or 4, characterized in that the partition plates (14) extend at least substantially radially relative to the longitudinal axis (12) of the cup-shaped body (6).

6. Device according to any one of the claims 1-5, characterized in that the channels (9) are open at their side directed towards the cavity (13).

7. Device according to any one of the claims 1-5, characterized in that the channels (9) are closed at their side directed towards the cavity (13).

8. Device according to any one of the claims 1-7, characterized in that it consists of a box-shaped means (1) comprising a plurality of cup-shaped bodies (6) arranged in rows and columns.

9. Device according to any one of the claims 1-7, characterized in that it comprises a plurality of cup-shaped bodies which are mutually connected by an elongated flexible connecting means, or by flexible connecting means located between the cup-shaped bodies (6).

10. Device according to claim 9, characterized in that the cup-shaped bodies (6) are detachably connected to the connecting means.

11. Device according to any one of the claims 1-10, characterized in that the ball of cultivating material can be removed by several fingers (17) which are reciprocatingly movable through the channels (9) of the cup-shaped body (6) by means of driving means, and by at least one ejection means (18), which is reciprocatingly movable through the passage (8) in the bottom plate (7) of the cup-shaped body (6) by means of driving means.

12. Device according to claim 11, characterized in that the fingers (17) are reciprocatingly movable independently of the ejection means (18).

13. Device according to claim 11, characterized in that the fingers (17) and the ejection means (18) are jointly reciprocatingly movable.

14. Device according to any one of the claims 11-13, characterized in that an ejection means (18) can be moved upwards along such a distance that the ball of cultivating material (15) moved upwards by the ejection means (18) will come to lie at least with its upper ends above the upper ends of the upwardly moved fingers (17).

## Patentansprüche

1. Vorrichtung zum Aufziehen von Pflanzen, ausgestattet mit mindestens einem becherförmigen Körper (6), der eine sich nach oben erstreckende Abgrenzungswand (5) sowie eine Bodenplatte (7) aufweist, die einen zur Aufnahme eines Kulturmedium-Ballens (15) zum Aufziehen einer Pflanze (16) dienenden Hohlraum (13) umgrenzen, wobei die Bodenplatte über mindestens eine Öffnung (8) verfügt und mehrere Kanäle (9), die an ihren oberen und unteren Enden geöffnet sind und sich in vertikaler Richtung des becherförmigen Körpers (6) erstrecken, nahe der Abgrenzungswand (5) verlaufen,
**dadurch gekennzeichnet**, **daß** jeder Kanal (9) an seinem unteren Ende durch einen Wandteil (10) mit einer Öffnung (11) abgeschlossen ist, wobei die obere Fläche dieses Wandteiles (10) eine Abwärtsneigung in Richtung auf den Hohlraum (13) des becherförmigen Körpers (6) aufweist.

2. Vorrichtung gemäß Anspruch 1, **dadurch gekennzeichnet, daß** ein Teil der Bodenplatte (7), der eine in dieser Bodenplatte (7) vorgesehene Öffnung (18) umgibt, einen rinnenförmigen Querschnitt aufweist.

3. Vorrichtung gemäß Anspruch 1 oder 2, **dadurch gekennzeichnet, daß** die Bodenplatte (7) Trennplatten (14) aufweist, die sich ausgehend von der Bodenplatte nach oben erstrecken.

4. Vorrichtung gemäß Anspruch 3, **dadurch gekennzeichnet, daß** die Trennplatten (14) in demjenigen Teil der Bodenplatte (7) angeordnet sind, der den rinnenförmigen Querschnitt aufweist.

5. Vorrichtung gemäß Anspruch 3 oder 4, **dadurch gekennzeichnet, daß** die Trennplatten (11) zumindest im wesentlichen radial zur Längsachse (12) des becherförmigen Körpers (6) verlaufen.

6. Vorrichtung gemäß einem der Ansprüche 1 - 5, **dadurch gekennzeichnet, daß** die Kanäle (9) an ihrer zu dem Hohlraum (13) weisenden Seite offen sind.

7. Vorrichtung gemäß einem der Ansprüche 1 - 5, **dadurch gekennzeichnet, daß** die Kanäle (9) an ihrer zu dem Hohlraum (13) weisenden Seite geschlossen sind.

8. Vorrichtung gemäß einem der Ansprüche 1 - 7, **dadurch gekennzeichnet, daß** diese aus einer kastenförmigen Anordnung (1) besteht, die mehrere - in Reihen und Spalten angeordnete - becherörmige Körper (6) umfaßt.

9. Vorrichtung gemäß einem der Ansprüche 1 - 7, **dadurch gekennzeichnet daß** diese mehrere becherförmige Körper umfaßt, die durch ein langgestrecktes, flexibles Verbindungsmittel oder durch zwischen den becherförmigen Körpern (6) angeordnete flexible Verbindungsmittel miteinander verbunden sind.

10. Vorrichtung gemäß Anspruch 9, **dadurch gekennzeichnet, daß** die becherförmigen Körper (6) an dem Verbindungsmittel lösbar befestigt sind.

11. Vorrichtung gemäß einem der Ansprüche 1 - 10, **dadurch gekennzeichnet, daß** sich der Kulturmedium-Ballen durch mehrere Finger (17), die mit Hilfe von Antriebsmitteln durch die Kanäle (9) des becherförmigen Körpers (6) hin- und herbeweglich sind, sowie durch mindestens eine Ausstoßvorrichtung (18), die durch die Öffnung (8) in der Bodenplatte (7) des becherförmigen Körpers (6) ebenfalls mit Hilfe von Antriebsmitteln hin- und herbeweglich ist, entfernen läßt.

12. Vorrichtung gemäß Anspruch 11, **dadurch gekennzeichnet, daß** sich die Finger (17) unabhängig von der Ausstoßvorrichtung (18) hin- und herbewegen lassen.

13. Vorrichtung gemäß Anspruch 11, **dadurch gekennzeichnet, daß** sich die die Finger (17) und die Ausstoßvorrichtung (18) gemeinsam hin- und herbewegen lassen.

14. Vorrichtung gemäß einem der Ansprüche 11 - 13, **dadurch gekennzeichnet, daß** sich die Ausstoßvorrichtung (18) soweit nach oben bewegen läßt, daß der von der Ausstoßvorrichtung (18) hochgedrückte Kulturmedium-Ballen (15) zumindest mit seinem oberen Ende über den oberen Enden der aufwärtsbewegten Finger (17) zu liegen kommt.

## Revendications

1. Dispositif pour cultiver des plantes comprenant au moins une alvéole en forme de pot (6) comprenant au moins un bord latéral (5) et un fond (7), qui délimitent une cavité (13) destinée a recevoir une motte de matériau de culture (15) de plante (16), le fond comprenant au moins une ouverture (8), et plusieurs conduites (9) ouvertes à leurs extrémités supérieure et inférieure, s'étendant à la verticale de l'alvéole en forme de pot et disposées près du bord latéral (5),
le dispositif étant caractérisé en ce que, à ses extrémités inférieures, chaque conduite (9) est fermée par une portion de paroi présentant une ouverture (11), la surface supérieure de ladite portion de paroi (10) étant inclinée en direction de la cavité (13) de l'alvéole en forme de pot (6).

2. Dispositif selon la revendication 1, caractérisé en ce qu'une portion du fond (7), entourant un passage (18) dans celui-ci, a une section en coupe présentant une forme de rigole.

3. Dispositif selon l'une des revendications 1 et 2, caractérisé en ce que le fond (7) présente des éléments de séparation (14) s'étendant depuis le fond.

4. Dispositif selon la revendication 3, caractérisé en ce que les éléments de séparation sont situés sur la portion du fond présentant une forme de rigole.

5. Dispositif selon la revendication 1 ou 2, caractérisé en ce que les éléments de séparation (14) s'étendent au moins substantiellement radialement par rapport a' l'axe longitudinal (12) de l'alvéole en forme de pot.

6. Dispositif selon l'une quelconque des revendications 1 à 5, caractérisé en ce que les conduites (9) sont ouvertes sur leur face dirigée vers l'intérieur de la cavité (13).

7. Dispositif selon l'une quelconque des revendications 1 à 5, caractérisé en ce que les conduites (9) sont fermées sur leur face dirigée vers l'intérieur de la cavité.

8. Dispositif selon l'une quelconque des revendications 1 à 7, caractérisé en ce qu'il est constitué d'un bac (1) comprenant une pluralité d'alvéoles en forme de pots (6) disposées en rangées et colonnes.

9. Dispositif selon l'une quelconque des revendications 1 à 7, caractérisé en ce qu'il comprend une pluralités d' alvéoles en forme de pots reliées les unes aux autres par des moyens de connexion flexibles allongés, ou par des moyens de connexion flexibles situés entre les alvéoles.

10. Dispositif selon la revendication 9, caractérisé en ce que les alvéoles en forme de pots peuvent être détachées des moyens de connexion.

11. Dispositif selon l'une quelconque des revendications 1 à 10, caractérisé en ce que les mottes de matériau de culture peuvent être déplacées par plusieurs aiguilles (17) pouvant effectuer un mouvement de va et vient dans les conduites (9) des alvéoles en forme de pots (6) grâce à des moyens d'entraînement, et par au moins un moyen d'extraction (18) pouvant effectuer un mouvement de va et vient dans l'ouverture (8) de la portion du fond (7) des alvéoles en forme de pots (6), grâce à des moyens d'entraînement.

12. Dispositif selon la revendication 11, caractérisé en ce que les aiguilles (17) peuvent effectuer un mouvement de va et vient sans l'action des moyens d'entraînement.

13. Dispositif selon la revendication 11, caractérisé en ce que les aiguilles (17) et les moyens d'extraction peuvent effectuer un mouvement combiné de va et vient.

14. Dispositif selon l'une quelconque des revendications 11 à 13, caractérisé en ce que les moyens d'extraction (18) peuvent être déplacés vers le haut sur une distance telle que au moins l'extrémité supérieure de la motte de matériau de culture (15) déplacée vers le haut par les moyens d'extraction (18) soit mise en contact avec les extrémités supérieures des aiguilles (17) déplacées vers le haut.
